# FASCICULE DE BREVET EUROPEEN

(11) **EP 1 646 126 B1**
(45) Date de publication et mention de la délivrance du brevet: **31.12.2008**
(21) Numéro de dépôt: 05292029.5
(22) Date de dépôt: 29.09.2005
(51) Int. Cl.: H02K 1/30, H02K 1/27

(54) **Rotor pour moteur électrique et moteur électrique correspondant**
Rotor für eine elektrische Maschine und diesen enthaltende elektrische Maschine
Rotor for an electric motor and electric motor including the same

(30) Priorité: 05.10.2004 FR 0410497; 14.09.2005 FR 0509390
(43) Date de publication de la demande: 12.04.2006
(73) Titulaire: ALSTOM Transport SA, 92300 Levallois-Perret (FR)
(72) Inventeur: Randriamanantena, Andry, 25000 Besançon (FR)
(74) Mandataire: Blot, Philippe Robert Emile

(56) Documents cités:
- EP-A- 0 844 722
- US-B1- 6 376 958
- US-B2- 6 796 198
- PATENT ABSTRACTS OF JAPAN vol. 1999, no. 14, 22 décembre 1999 (1999-12-22) -& JP 11 252833 A (HONDA MOTOR CO LTD), 17 septembre 1999 (1999-09-17)
- PATENT ABSTRACTS OF JAPAN vol. 2000, no. 14, 5 mars 2001 (2001-03-05) -& JP 2000 324736 A (MITSUBISHI ELECTRIC CORP), 24 novembre 2000 (2000-11-24)

## Description

La présente invention concerne un rotor pour moteur électrique, du type comprenant plusieurs éléments d'entraînement magnétiques répartis autour de l'axe de rotation du rotor, chaque élément d'entraînement magnétique définissant un pôle magnétique du rotor possédant un axe magnétique sensiblement radial, et comprenant au moins un aimant permanent.

Les rotors de moteurs électriques à aimants permanents comprennent des aimants permanents répartis sur leurs pourtours, chaque aimant permanent constituant un pôle magnétique du rotor.

En fonctionnement, la matière du rotor est traversée par des flux magnétiques circulant entre les aimants permanents. Ces flux magnétiques ont pour origine les aimants permanents eux-mêmes et un champ magnétique induit par le stator du moteur électrique.

Du fait des flux magnétiques circulant dans le rotor, des pertes électriques, notamment par circulation de courant induits dans le rotor et effet Joule, peuvent survenir.

Pour limiter la formation de courants axialement dans le rotor, il est possible de prévoir, par exemple comme dans le document EP 1 239 569, un rotor constitué par un assemblage feuilleté composé de disques conducteurs de champ magnétique intercalés avec des disques isolants du point de vue électromagnétique, et de fixer les aimants sur le pourtour de cet assemblage. L'assemblage est directement disposé sur un arbre.

Néanmoins, les assemblages feuilletés sont coûteux à réaliser. Ceci est d'autant plus vrai pour les rotors de forte puissance présentant des diamètres importants.

Des efforts sont entrepris pour concevoir des rotors pouvant être à la fois légers, rigides et de coûts de fabrication faible.

Le document EP 0 854 558 décrit un rotor comprenant un élément cylindrique poreux faisant office de moyeu, autour duquel est disposé un assemblage feuilleté sur le pourtour duquel sont disposés des aimants permanents. L'élément poreux cylindrique est réalisé en résine chargée de poudre de fer. Dans une variante, l'élément poreux cylindrique est réalisé par une structure en nid d'abeille métallique ou en résine.

Le document EP 1 050 946 décrit un rotor pour moteur électrique composite comprenant un moyeu en acier entouré par un élément annulaire constitué de résine lui-même entouré par une bande en acier non ferromagnétique. Un assemblage feuilleté entoure la bande en acier non ferromagnétique et porte sur son pourtour des aimants.

Toutefois, ces rotors ne donnent pas entièrement satisfaction lorsque l'on rapporte le poids et leur coût de fabrication aux limitations des pertes électromagnétiques qu'ils permettent.

Un rotor selon le préambule de la revendication 1 est connu de JP 11255 833.

Un but de la présente invention est de proposer un rotor pour moteur électrique permettant de diminuer les pertes électromagnétiques.

A cet effet, la présente invention propose un rotor pour moteur électrique selon la revendication 1.

Selon des modes de réalisation particuliers, le rotor comprend une ou plusieurs des caractéristiques suivantes, prise(s) isolément ou selon toutes les combinaisons techniquement possibles :
- l'isolant recouvre toutes les faces de chaque aimant ;
- le ou chaque élément magnétique d'entraînement présente au moins un plan de séparation parallèle à l'axe du rotor ;
- le ou chaque élément magnétique d'entraînement présente au moins un plan de séparation perpendiculaire à l'axe du rotor ;
- le moyeu est massif et constitué d'un métal ou d'un alliage métallique conducteur de champ magnétique ;
- la jante est venue de matière avec le moyeu ;
- la jante et/ou le moyeu sont constitués de fer ou d'acier conducteur de champ magnétique ;
- les éléments magnétiques d'entraînement sont des aimants permanents ;
- la jante est plus longue axialement que le moyeu, de sorte que le rotor présente à au moins une de ses extrémités axiales un évidement central délimité radialement par la jante et axialement par le moyeu ;
- le moyeu comprend une portion centrale tubulaire et un voile radial reliant radialement la portion centrale tubulaire à la jante ;
- la portion centrale tubulaire est plus longue axialement que le voile radial ;
- l'assemblage feuilleté présente une épaisseur radiale comprise entre 2 et 100 mm, de préférence entre 5 et 50 mm ;
- le rapport de l'épaisseur radiale de l'assemblage feuilleté et l'épaisseur radiale de la jante est compris entre 0,2 et 5 ;
- le rapport de l'épaisseur radiale de l'assemblage feuilleté et l'épaisseur radiale de la jante est compris entre 0,25 et 1 ;
- les épaisseurs de l'assemblage feuilleté et de la jante sont choisies de sorte que le champ magnétique induit par les harmoniques circule dans l'assemblage feuilleté et le champ magnétique induit par le fondamental circule dans la jante et dans l'assemblage feuilleté ; et
- l'assemblage feuilleté comprend des premiers disques annulaires conducteurs de champ magnétique alternés avec des seconds disques annulaires constitués d'un matériau qui est un isolant électromagnétique.

L'invention concerne également un moteur électrique comprenant un stator et un rotor tel que défini ci-dessus.

Dans un mode de réalisation, le rotor et le stator sont reçus dans un carter, le stator étant solidaire du carter, le rotor étant solidaire d'un arbre, le moteur comprenant des paliers de guidage en rotation disposés entre le carter et l'arbre, au moins un palier étant reçu au moins en partie dans un évidement du rotor.

L'invention sera mieux comprise à la lecture de la description qui va suivre, donnée uniquement à titre d'exemple, et faite en se référant aux dessins annexés, sur lesquels :
- la figure 1 est une vue en coupe axiale d'un moteur électrique à aimants permanents comprenant un rotor conforme à l'invention ;
- la figure 2 est une vue en coupe selon II-II du rotor de la figure 1 ;
- la figure 3 est analogue à la figure 1 et illustre un rotor seul, selon une variante de l'invention ;
- la figure 4 est une vue en perspective d'un élément d'entraînement magnétique ; et
- les figures 5 et 6 sont des vues schématiques de dessus illustrant des circulations de courant de Foucault dans un élément d'entraînement magnétique lors du fonctionnement du moteur électrique.

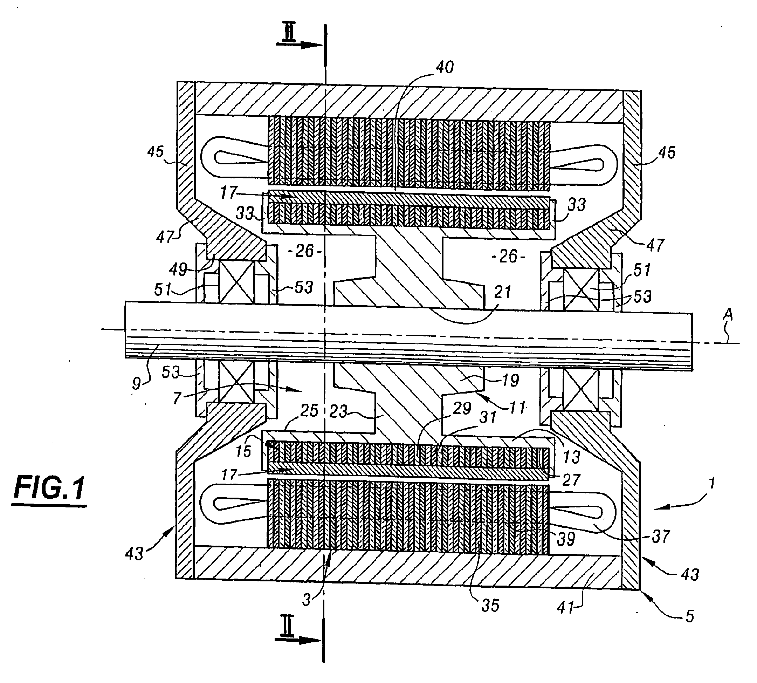

Tel que représenté sur la figure 1, un moteur électrique 1 comprend un stator 3 solidaire d'un carter 5 et un rotor 7 solidaire d'un arbre 9.

Le rotor 7 comprend un moyeu 11, une jante 13 entourant le moyeu 11 et fixée sur la périphérie du moyeu 11, un assemblage feuilleté 15 tubulaire cylindrique entourant la jante 13 et fixé sur la jante 13, et des éléments magnétiques d'entraînement 17 répartis sur le pourtour extérieur de l'assemblage feuilleté 15.

Le moyeu 11 comprend une portion centrale 19 tubulaire munie d'un alésage 21 dans lequel est reçu l'arbre 9. Le moyeu 11 et l'arbre 9 sont solidarisés en rotation à l'aide de moyens d'entraînement non représentés, comme par exemple des cannelures. Le moyeu 11 comprend un voile radial 23 annulaire entourant la portion centrale 19 et s'étendant radialement entre la portion centrale 19 et la jante 13. La portion centrale 19 est plus longue axialement que le voile radial 23.

La jante 13 est tubulaire et cylindrique, et présente une surface intérieure 25 et une surface extérieure 27 cylindrique.

La jante 13 est plus longue axialement que le voile radial 23 et que la portion centrale 19. La jante 13 est par conséquent reliée au moyeu 11 seulement sur un tronçon limité axialement de la surface intérieure 25 de la jante 13.

La jante 13 est par exemple centrée axialement par rapport au moyeu 11.

Des évidements 26 sont ainsi formés à chaque extrémité axiale du rotor 7. Les évidements 26 sont délimités radialement par la surface intérieure 25 de la jante 13 et axialement par le moyeu 11.

L'assemblage feuilleté 15 est composé de disques annulaires 29, 31 empilés axialement. L'assemblage feuilleté 15 comprend des premiers disques 29 conducteurs de champ magnétique alternés avec des seconds disques 31 constitués d'un matériau qui est un isolant électromagnétique.

L'assemblage feuilleté 15 est disposé autour de la jante 13 en étant enfilé sur sa surface extérieure 27.

De préférence, au moins les premiers disques 29 sont en contacts par leurs bords intérieurs avec la surface extérieure 27 de la jante 13, afin de réaliser une continuité magnétique entre ces disques 29 et la jante 13.

Des encoches axiales sont par exemple ménagées sur la surface extérieure de l'assemblage feuilleté 15 opposé à la jante 13 pour y disposer les éléments magnétiques d'entraînement 17.

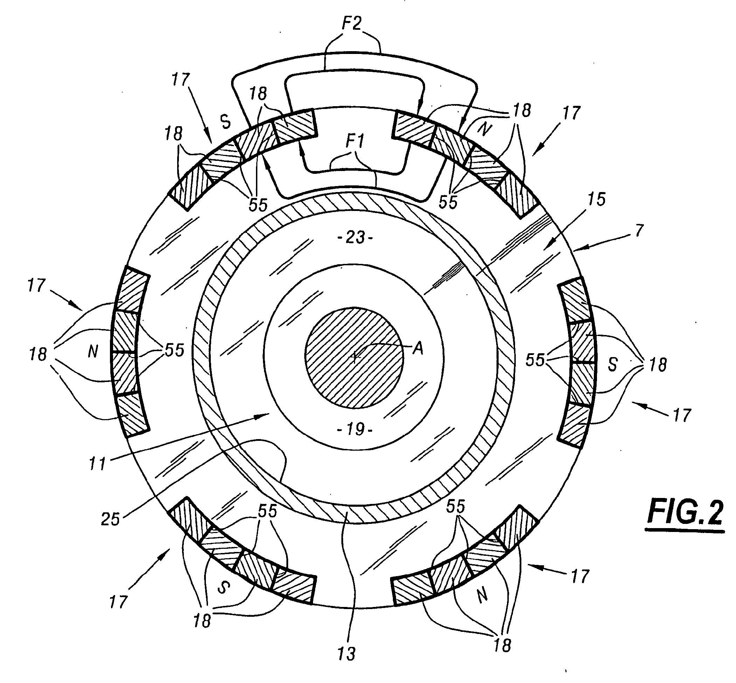

Comme illustré sur la figure 2, les éléments magnétiques d'entraînement 17 sont par exemple circonférentiellement régulièrement espacés et possèdent des axes magnétiques radiaux et des polarités alternées lorsque l'on suit la circonférence du rotor 7. Chaque élément magnétique d'entraînement 17 forme un pôle magnétique du rotor 7, c'est-à-dire une région de concentration des lignes de champ magnétique.

Le rotor 7 comprend par exemple six éléments magnétiques d'entraînement 17 répartis à 60° atour de l'axe de rotation du rotor.

Chaque élément magnétique d'entraînement 17 comprend plusieurs aimants permanents 18, comme cela sera décrit plus en détail par la suite.

En revenant à la figure 1, l'assemblage feuilleté 15 est retenu axialement sur la jante 13 par des collerettes 33 s'étendant radialement vers l'extérieur à partir des extrémités axiales de la jante 13. Les collerettes 33 peuvent être rapportées sur la jante 13 ou venues de matière avec la jante 13 et réalisées par exemple par pliage.

La jante 13 est massive et constituée exclusivement d'un métal ou d'un alliage métallique conducteur de champ magnétique, en particulier ferromagnétique.

Un alliage métallique désigne ici un produit métallique obtenu en incorporant à un métal un ou plusieurs éléments.

Un métal adéquat est du fer qui présente une perméabilité et une saturation magnétiques excellentes. Un alliage métallique est par exemple un alliage ferreux, et en particulier un acier, de préférence un acier doux. Des nuances d'acier possibles sont les nuances C22 à C60 selon la norme EN10083.

L'acier présente généralement une perméabilité et une saturation magnétiques inférieures à celle du fer, mais des propriétés mécaniques de résistance plus élevées.

Avantageusement, le moyeu 11 est également massif est constitué exclusivement d'un métal ou d'un alliage métallique conducteur de champ magnétique, en particulier ferromagnétique.

Pour limiter les coûts de fabrication du rotor 7, tout en augmentant sa solidité, la portion centrale 19, le voile radial 23 et la jante 13 sont réalisés d'un seul tenant en étant venus de matière.

Les premiers disques 29 de l'assemblage feuilleté 15 sont par exemple également constitués d'un métal ou d'un alliage métallique conducteur de champ magnétique, en particulier ferromagnétique, identique ou différent de celui de la jante 13 et/ou du rotor 7.

Le rapport entre l'épaisseur radiale de l'assemblage feuilleté 15 et l'épaisseur radiale de la jante 13 est par exemple compris entre 0,1 et 5, de préférence entre 0,25 et 1.

L'épaisseur radiale de l'assemblage feuilleté 15 est par exemple comprise entre 2 et 100 mm, de préférence entre 5 et 50 mm.

Le stator 3 entoure le rotor 7. Le stator 3 comprend un assemblage feuilleté 35 similaire à l'assemblage feuilleté 15 du rotor 7 mais présentant un diamètre intérieur supérieur au diamètre extérieur du rotor 7. Le stator 3 comprend des bobinages 37 s'étendant axialement dans son assemblage feuilleté 35 à travers des passages axiaux 39.

Les bobinages 37 sont reliés de façon non représentée à des moyens d'alimentation électrique.

L'espace annulaire situé radialement entre l'assemblage feuilleté 15 du rotor 7 et l'assemblage feuilleté 35 du stator 3 constitue l'entrefer 40 du moteur 1.

Le carter 5 comprend une enveloppe 41 tubulaire et cylindrique entourant le stator 3. Le stator 3 est fixé sur la surface intérieure de l'enveloppe 41.

Le carter 5 est fermé axialement à ses extrémités par l'intermédiaire de deux flasques 43 annulaires sensiblement symétriques par rapport à un plan radial médian du moteur électrique 1.

Chaque flasque 43 comprend une couronne 45 extérieure annulaire radiale et une portion intérieure annulaire 47 tronconique s'étendant à partir de la zone de plus petit diamètre de la couronne 45 radialement vers l'intérieur, et axialement vers l'intérieur du carter 5.

La portion intérieure 47 de chaque flasque 43 converge par conséquent en direction de l'autre flasque 43, vers l'intérieur du carter 5.

Plus précisément, la portion intérieure 47 de chaque flasque 43 revient axialement en direction du rotor 7 de façon qu'elle est en saillie partiellement dans l'évidemment 26 correspondant.

La portion intérieure 47 présente au niveau de sa zone de plus petit diamètre un talon 49 annulaire qui entoure l'arbre 9. Des paliers 51 de guidage en rotation sont disposés radialement entre le talon 49 de chaque flasque 43 et l'arbre 9.

Des moyens d'étanchéité, par exemple des joints annulaires 53, sont disposés radialement entre chaque talon 49 et l'arbre 9, axialement de chaque côté du palier 51 correspondant. Les joints 53 assurent l'étanchéité entre le carter 5 et l'arbre 9 pour éviter la pollution de l'intérieur du carter 5.

Les paliers 51 et les moyens d'étanchéité 53 portés par le talon 49 sont en partie reçus dans les évidements 26 correspondants. La présence des évidements 26 permet ainsi de limiter l'encombrement axial du moteur électrique 1 dans son ensemble.

En fonctionnement, les bobinages 37 sont alimentés en énergie électrique avec un signal électrique d'excitation présentant un profil déterminé, par exemple un profil périodique du type sinusoïdal ou carré.

Les bobinages 37 créent un champ électromagnétique d'excitation variable à l'intérieur du stator 3. Les éléments magnétiques d'entraînement 17 soumis à ce champ électromagnétique d'excitation subissent des efforts dirigés circonférentiellement. Le rotor 7 est par conséquent entraîné en rotation autour de l'axe de l'arbre 9.

Un flux magnétique circule dans le moteur 1 du stator 3 vers les éléments magnétiques d'entraînement 17 à travers l'entrefer 40, puis entre les éléments magnétique d'entraînement 17 à travers les premiers disques 29 de l'assemblage feuilleté 15 et la jante 13 (comme illustré par les flèches F1 sur la figure 2), puis retourne vers le stator 3 par l'entrefer 40. Le flux magnétique circule dans le stator (comme illustré par les flèches F2 sur la figure 2) avant de revenir vers le rotor 7.

Des courants électriques, du type courants de Foucault, tendent à se former dans le rotor 7 du fait du déplacement de celui-ci dans le champ électromagnétique.

Ces courants électriques se déplacent principalement axialement dans le rotor 7. La présence de l'assemblage feuilleté 15 permet d'éviter la formation de tels courants électriques et limite par conséquent les pertes électromagnétiques, en particulier les pertes par effet Joule.

Le signal d'excitation périodique peut être décomposé en fonction de sa forme en une pluralité de signaux sinusoïdaux comprenant un signal fondamental de plus grande amplitude et de plus basse fréquence et des signaux harmoniques d'amplitude moindre et de fréquences multiples de la fréquence du signal fondamental.

Le champ électromagnétique induit dans le rotor 7 peut de la même façon être décomposé en un champ électromagnétique induit par le signal fondamental et des champs magnétiques induits par les signaux harmoniques.

Le champ électromagnétique induit par le signal fondamental permet principalement l'entraînement en rotation du rotor 7.

Les champs électromagnétiques induits par les signaux harmoniques sont principalement à l'origine des pertes électromagnétiques.

La profondeur de pénétration radiale des champs électromagnétiques induits par chaque signal fondamental ou harmonique est en outre inversement proportionnelle à la fréquence de ceux-ci.

Les champs électromagnétiques induits par les signaux harmoniques possèdent par conséquent une profondeur de pénétration dans l'épaisseur radiale du rotor 7 inférieure à celle du champ électromagnétique induit par le signal fondamental.

L'épaisseur radiale de l'assemblage feuilleté 15 est choisie pour que, en fonctionnement, son épaisseur soit supérieure à la profondeur de pénétration des champs électromagnétiques induits par les signaux harmoniques.

L'épaisseur radiale de la jante 13 est prévue de façon que l'épaisseur radiale de l'assemblage feuilleté 15 ajoutée à celle de la jante 13 soit supérieure à la profondeur maximale de pénétration du champ électromagnétique induit par le signal fondamental.

Ainsi, l'assemblage 15 et la jante 13 permettent la circulation du flux magnétique du champ électromagnétique induit par le signal fondamental, circonférentiellement entre les éléments magnétiques d'entraînement 17. L'assemblage feuilleté 15 assure le passage du flux magnétique des champ électromagnétiques induits par les signaux harmoniques circonférentiellement entre les éléments magnétiques d'entraînement 17 tout en empêchant la propagation axialement de courants électriques résultants des champs électromagnétique induits par les signaux harmoniques. Ceci permet de limiter les pertes électromagnétiques dues aux signaux harmoniques.

Par exemple, dans un signal périodique en créneau, la fréquence fondamentale est égale à celle du signal en créneau et la première fréquence harmonique est cinq fois supérieure à la fréquence fondamentale. Par conséquent, la profondeur de pénétration du champ électromagnétique induit par le signal fondamental est cinq fois supérieure à la profondeur de pénétration du champ électromagnétique induit par le premier signal harmonique.

Il est donc possible dans ce cas de prévoir un assemblage feuilleté 15 présentant une épaisseur radiale quatre fois inférieure à celle de la jante 13. De façon générale, la limitation de l'épaisseur radiale de l'assemblage feuilleté 15 permet de limiter le coût de fabrication du rotor 7.

La jante 13 massive, c'est-à-dire pleine et dépourvue de porosités, et réalisée entièrement en métal ou alliage métallique conducteur de champ magnétique présente une perméabilité magnétique et une saturation magnétique élevées, contrairement à un matériau poreux ou à une résine, même chargée de particule de fer. Ceci permet de boucler le circuit du flux magnétique dans le rotor 7 en limitant la résistance au passage du flux magnétique dans le rotor 7, et d'obtenir un moteur électrique présentant des performances améliorées, notamment en termes de vitesse de rotation maximale et de couple transmissible à l'arbre 9.

La jante 13 massive est en outre résistante et sa fabrication est aisée, contrairement par exemple à un matériau en nid d'abeille.

La jante 13 étant sensiblement tubulaire et reliée au moyeu 11 seulement sur une région axiale limitée de sa surface intérieure, le rotor 7 est léger tout en étant résistant, et en permettant la circulation de flux magnétiques.

Le moteur électrique 1 peut être utilisé dans des applications nécessitant des couples très importants. Par exemple, le moteur électrique 1 est employé pour l'entraînement de véhicules ferroviaires tels que des trains ou des tramways.

Comme cela est visible sur la figure 2, chaque élément magnétique d'entraînement 17 est segmenté et comprend une pluralité d'aimants permanents 18, par exemple quatre, adjacents et séparés entre eux par un isolant électrique 55 interdisant la circulation d'un courant électrique entre les aimants 18 voisins.

Plus précisément, les aimants 18 de chaque élément 17 sont allongés suivant l'axe de rotation du rotor 7 et disposés côte à côte suivant la circonférence du rotor 7. Les aimants 18 de chaque élément 17 sont séparés entre eux suivant des plans axiaux, c'est-à-dire des plans parallèles à l'axe A et passant par l'axe A.

L'isolant 55 est disposé entre les aimants 18 de chaque élément 17 sous la forme de films s'étendant suivant les plan de séparation.

Les aimants 18 de chaque élément 17 possèdent des axes magnétiques sensiblement radiaux et de même polarité. Chaque élément 17 possède donc un axe magnétique résultant radial et de même polarité que les aimants 18 qui le constituent.

L'isolant 55 est interposé suivant les plans axiaux de séparation des aimants 18, c'est-à-dire des plans parallèles aux axes magnétiques des aimants 18. Plus précisément, l'isolant 55 enrobe chaque aimant 18 et recouvre toutes les faces de chaque aimants 18, notamment leurs faces dirigées radialement vers l'intérieur et l'extérieur.

En fonctionnement, le flux magnétique (flèches F1 et F2) traverse les aimants 18 radialement, suivant leur axe magnétique. Des courants électriques induits axiaux et circonférentiels à l'axe A tendent à se former dans les aimants 18 eux-mêmes.

L'isolant 55 possède une épaisseur faible (par exemple 20 micromètre), par rapport notamment à l'épaisseur d'un entrefer (par exemple 5 mm) ou des aimants 18 (par exemple 10 mm), de sorte que l"isolant 55 n'empêche pas la circulation du flux magnétique.

En revanche, l'isolant 55 s'oppose par nature à la circulation de courants induits circonférentiels à l'axe A entre les aimants 18 d'un même élément 17.

Par conséquent, les pertes électromagnétiques par effet Joule dans le rotor sont diminuées au niveau des aimants 18.

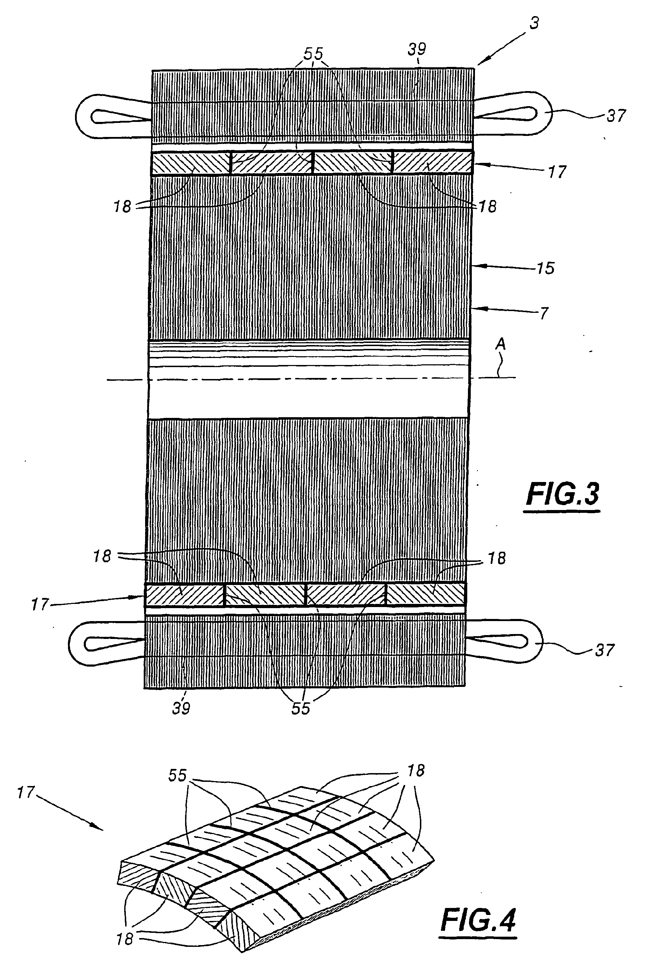

Dans le mode de réalisation de la figure 3, un rotor 7 porte des éléments magnétique d'entraînement 17, chaque élément 17 étant segmenté suivant des plan radiaux de séparation, perpendiculaires à l'axe A, et comprenant plusieurs aimants 18 alignés axialement en étant séparés par l'isolant 55 se présentant sous la forme de films s'étendant suivant les plan radiaux de séparation.

Tel qu'illustré sur cette figure 3, les éléments magnétiques d'entraînement 17 sont disposés sur un rotor 7 constitué d'un assemblage feuilleté 15. Les éléments magnétiques d'entraînement 17 sont en variante disposés sur le rotor 7 de la figure 1, et de façon plus générale sur tout type de rotor 7.

En variante, et comme illustré sur la figure 4, un élément 17 est segmenté suivant des plans de séparation axiaux et des plans de séparation radiaux.

En variante, la séparation entre les aimants 18 est effectuée suivant une ou plusieurs surfaces gauches.

De manière plus générale, l'élément 17 est segmenté suivant une ou plusieurs surfaces de séparation parallèles à l'axe magnétique de l'élément 17, les surfaces étant parallèles ou non entre elles.

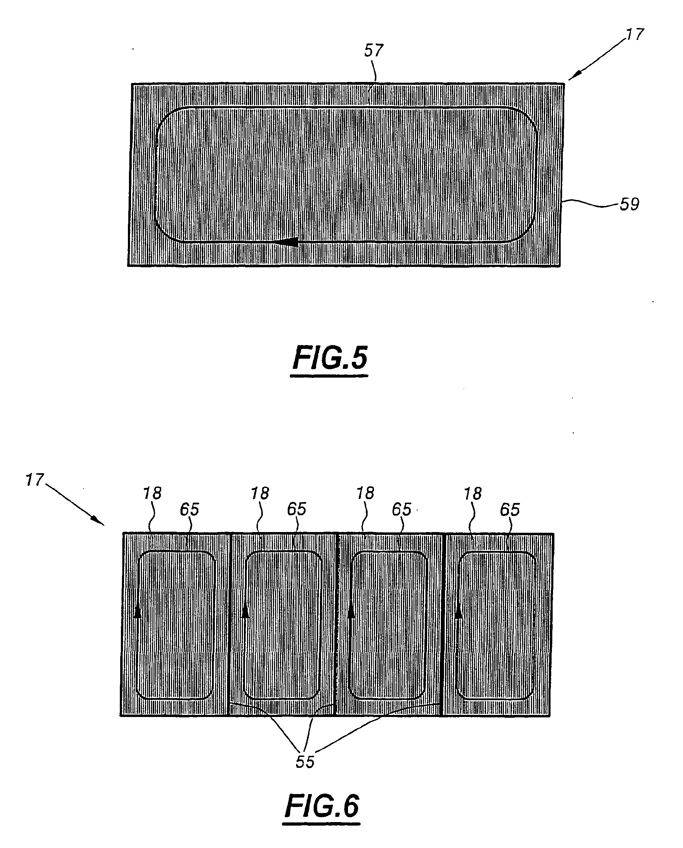

En première approche, plus un élément 17 est segmenté, plus les pertes électromagnétiques seront diminuées. Une segmentation grossière permet déjà une diminution importante, comme expliqué en relation avec les figures 5 et 6.

Sur la figure 5, une boucle 57 illustre une circulation de courants induits dans un élément magnétique d'entraînement 58 constitué d'un aimant permanent 59 monobloc, dont l'axe magnétique est perpendiculaire au plan de la figure 5.

Sur le figure 6, un élément magnétique d'entraînement 17, de mêmes dimensions que celui de la figure 5, est constitué de plusieurs aimants 18 séparés suivant des plans de séparation perpendiculaires au plan de la figure 6, un isolant électrique 55 s'étendant suivant ces plans de séparation.

Les courants induits lors du fonctionnement se propagent suivant des boucles 65 dans chacun des aimants 18.

La somme des longueurs des boucles 65 de la figure 6 est supérieure à la longueur de l'unique boucle 57 de la figure 5. Les courants induits rencontrent donc une plus grande résistance à leur circulation dans l'élément 17 de la figure 6, et il en résulte que les courants induits se forment plus difficilement dans l'élément 17. Par conséquent, pour un même flux magnétique traversant les éléments 17 et 58, les courants induits et les pertes par effet joule seront moins importants dans l'élément 17 que dans l'élément 58.

Dans des applications nécessitant un moteur électrique de forte puissance, avec un rotor de taille importante, la segmentation des éléments magnétiques d'entraînement permet en outre d'utiliser des aimants permanents de faibles dimension, moins coûteux à fabriquer.

On notera que le rotor 7 de la figure 1 présente des qualités intrinsèques de limitation des pertes électromagnétiques, de résistance, de coût de fabrication et de poids faible, même lorsqu'il porte des éléments magnétiques d'entraînement chacun sous la forme d'un aimant permanent monobloc ou encore d'un bobinage.

Plus généralement, l'invention a également pour objet un rotor comprenant un moyeu muni d'un alésage pour son montage sur un arbre, une jante entourant le moyeu, un assemblage feuilleté entourant la jante et fixé sur celle-ci, l'assemblage feuilleté comprenant des disques annulaires conducteurs de champ magnétique empilés, les éléments magnétiques d'entraînement étant répartis sur le pourtour extérieur de l'assemblage feuilleté, et la jante étant massive et constituée d'un métal ou d'un alliage métallique conducteur de champ magnétique pour permettre le passage à travers la jante d'un flux magnétique circulant entre les éléments magnétiques d'entraînement lors du fonctionnement d'un moteur électrique équipé du rotor.

Les éléments magnétiques 17 sont répartis sur le pourtour extérieur de l'assemblage 15. Ils sont formés par des aimants par exemple circonférentiellement régulièrement espacés et présentant des polarités alternées. Il n'est pas nécessaire qu'au moins un des éléments magnétiques d'entraînement comprenne une pluralité d'aimants permanents distincts, les aimants du ou de chaque élément magnétique d'entraînement étant séparés entre eux suivant au moins une surface de séparation sensiblement parallèle à l'axe magnétique du ou de chaque élément magnétique d'entraînement, et un isolant électrique interposé entre les aimants du ou de chaque élément magnétique d'entraînement suivant la ou chaque surface de séparation.

## Revendications

1. Rotor pour moteur électrique, du type comprenant plusieurs éléments d'entraînement magnétiques (17) répartis autour de l'axe (A) de rotation du rotor, chaque élément d'entraînement magnétique (17) définissant un pôle magnétique du rotor et possédant un axe magnétique sensiblement radial, chaque élément magnétique d'entraînement comprenant au moins un aimant permanent (18),
au moins un des éléments magnétiques d'entraînement (17) comprenant une pluralité d'aimants permanents (18) distincts, les aimants (18) du ou de chaque élément magnétique d'entraînement (17) étant séparés entre eux suivant au moins une surface de séparation sensiblement parallèle à l'axe magnétique du ou de chaque élément magnétique d'entraînement (17), et un isolant électrique (55) interposé entre les aimants (18) du ou de chaque élément magnétique d'entraînement (17) suivant la ou chaque surface de séparation,
**caractérisé en ce que** qu'il comprend :
- un moyeu (11) muni d'un alésage (21) pour son montage sur un arbre (9) ;
- une jante (13) entourant le moyeu (11) ;
- un assemblage feuilleté (15) entourant la jante (13) et fixé sur celle-ci, l'assemblage feuilleté (15) comprenant des disques annulaires (29) conducteurs de champ magnétique empilés axialement ; et **en ce que** :
- les éléments magnétiques d'entraînement (17) sont répartis sur le pourtour extérieur de l'assemblage feuilleté (15) ; et
- la jante (13) est massive et constituée d'un métal ou d'un alliage métallique conducteur de champ magnétique pour permettre le passage à travers la jante (13) d'un flux magnétique circulant entre les éléments magnétiques d'entraînement (17) lors du fonctionnement d'un moteur électrique équipé du rotor.

2. Rotor selon la revendication 1, **caractérisé en ce que** l'isolant (55) recouvre toutes les faces de chaque aimant (18).

3. Rotor selon la revendication 1 ou 2, **caractérisé en ce que** le ou chaque élément magnétique d'entraînement (17) présente au moins un plan de séparation parallèle à l'axe (A) du rotor.

4. Rotor selon l'une quelconque des revendications précédentes, **caractérisé en ce que** le ou chaque élément magnétique d'entraînement (17) présente au moins un plan de séparation perpendiculaire à l'axe (A) du rotor.

5. Rotor selon l'une quelconque des revendications précédentes, **caractérisé en ce que** le moyeu (11) est massif et constitué d'un métal ou d'un alliage métallique conducteur de champ magnétique.

6. Rotor selon la revendication 5, **caractérisé en ce que** la jante (13) est venue de matière avec le moyeu (11).

7. Rotor selon l'une quelconque des revendications précédentes, **caractérisé en ce que** la jante (13) et/ou le moyeu (11) sont constitués de fer ou d'acier conducteur de champ magnétique.

8. Rotor selon l'une quelconque des revendications précédentes, **caractérisé en ce que** les éléments magnétiques d'entraînement (17) sont des aimants permanents.

9. Rotor selon l'une quelconque des revendications précédentes, **caractérisé en ce que** la jante (13) est plus longue axialement que le moyeu (11), de sorte que le rotor présente à au moins une de ses extrémités axiales un évidement central (26) délimité radialement par la jante (13) et axialement par le moyeu (11).

10. Rotor selon l'une quelconque des revendications précédentes, **caractérisé en ce que** le moyeu (11) comprend une portion centrale tubulaire (19) et un voile radial (23) reliant radialement la portion centrale tubulaire (19) à la jante (13).

11. Rotor selon la revendication 10, **caractérisé en ce que** la portion centrale tubulaire (19) est plus longue axialement que le voile radial (23).

12. Rotor selon l'une quelconque des revendications précédentes, **caractérisé en ce que** l'assemblage feuilleté (15) présente une épaisseur radiale comprise entre 2 et 100 mm, de préférence entre 5 et 50 mm.

13. Rotor selon l'une quelconque des revendications précédentes, **caractérisé en ce que** le rapport de l'épaisseur radiale de l'assemblage feuilleté et l'épaisseur radiale de la jante est compris entre 0,2 et 5.

14. Rotor selon la revendication 13, **caractérisé en ce que** le rapport de l'épaisseur radiale de l'assemblage feuilleté et l'épaisseur radiale de la jante est compris entre 0,25 et 1.

15. Rotor selon l'une quelconque des revendications précédentes, **caractérisé en ce que** les épaisseurs de l'assemblage feuilleté (15) et de la jante (13) sont choisies de sorte que le champ magnétique induit par les harmoniques circule dans l'assemblage feuilleté (15) et le champ magnétique induit par le fondamental circule dans la jante (13) et dans l'assemblage feuilleté (15).

16. Rotor selon l'une quelconque des revendications précédentes, **caractérisé en ce que** l'assemblage feuilleté (15) comprend des premiers disques (29) annulaires conducteurs de champ magnétique alternés avec des seconds disques (31) annulaires constitués d'un matériau qui est un isolant électromagnétique.

17. Moteur électrique comprenant un stator (3) et un rotor (7), **caractérisé en ce qu'**il comprend un rotor selon l'une quelconque des revendications précédentes.

18. Moteur électrique selon la revendication 17 dépendante de la revendication 9, **caractérisé en ce que** le rotor (7) et le stator (3) sont reçus dans un carter (5), le stator (3) étant solidaire du carter (5), le rotor (7) étant solidaire d'un arbre (9), le moteur comprenant des paliers (51) de guidage en rotation disposés entre le carter (5) et l'arbre (9), au moins un palier (51) étant reçu au moins en partie dans l'évidement (26) du rotor (7).

## Claims

1. Rotor for an electric motor, of the type comprising several magnetic drive elements (17) distributed about the rotational axis (A) of the rotor, each magnetic drive element (17) defining a magnetic pole of the rotor and having a substantially radial magnetic axis, each magnetic drive element comprising at least one permanent magnet (18), at least one of the magnetic drive elements (17) comprising a plurality of separate permanent magnets (18), the magnets (18) of the or of each magnetic drive element (17) being separated from one another in accordance with at least one separation surface substantially parallel with the magnetic axis of the or of each magnetic drive element (17) and an electrical insulator (55) interposed between the magnets (18) of the or of each magnetic drive element (17) in accordance with the or each separation surface, **characterized in that** it comprises:
- a hub (11) provided with a bore (21) for it to be mounted on a shaft (9),
- a rim (13) surrounding the hub (11),
- a laminated assembly (15) surrounding the rim (13) and fastened thereto, the laminated assembly (15) comprising axially packed, magnetic field-conducting annular discs (29) and **in that**:
- the magnetic drive elements (17) are distributed on the external circumference of the laminated assembly (15) and
- the rim (13) is solid and formed from a magnetic field-conducting metal or metal alloy so that a magnetic flux circulating between the magnetic drive elements (17) during operation of an electric motor fitted with the rotor can pass through the rim (13).

2. Rotor according to claim 1, **characterized in that** the insulator (55) covers all the faces of each magnet (18).

3. Rotor according to claim 1 or 2, **characterized in that** the or each magnetic drive element (17) has at least one separation plane parallel with the rotor axis (A).

4. Rotor according to any of the foregoing claims, **characterized in that** the or each magnetic drive element (17) has at least one separation plane perpendicular to the rotor axis (A).

5. Rotor according to any of the foregoing claims, **characterized in that** the hub (11) is solid and formed from a magnetic field-conducting metal or metal alloy.

6. Rotor according to claim 5, **characterized in that** the rim (13) forms one piece with the hub (11).

7. Rotor according to any of the foregoing claims, **characterized in that** the rim (13) and/or the hub (11) are formed from magnetic field-conducting iron or steel.

8. Rotor according to any of the foregoing claims, **characterized in that** the magnetic drive elements (17) are permanent magnets.

9. Rotor according to any of the foregoing claims, **characterized in that** the rim (13) is axially longer than the hub (11), so that the rotor has, at least at one of its axial ends, a central recess (26) defined radially by the rim (13) and axially by the hub (11).

10. Rotor according to any of the foregoing claims, **characterized in that** the hub (11) comprises a tubular central portion (19) and a radial disc (23), radially connecting the tubular central portion (19) with the rim (13).

11. Rotor according to claim 10, **characterized in that** the tubular central portion (19) is axially longer than the radial disc (23).

12. Rotor according to any of the foregoing claims, **characterized in that** the laminated assembly (15) is of a radial thickness of between 2 and 100 mm, preferably between 5 and 50 mm.

13. Rotor according to any of the foregoing claims, **characterized in that** the ratio of the radial thickness of the laminated assembly and the radial thickness of the rim is of between 0.2 and 5.

14. Rotor according to claim 13, **characterized in that** the ratio of the radial thickness of the laminated assembly and the radial thickness of the rim is of between 0.25 and 1.

15. Rotor according to any of the foregoing claims, **characterized in that** the thicknesses of the laminated assembly (15) and of the rim (13) are chosen so that the magnetic field induced by the harmonics circulates in the laminated assembly (15) and the magnetic field induced by the fundamental circulates in the rim (13) and in the laminated assembly (15).

16. Rotor according to any of the foregoing claims, **characterized in that** the laminated assembly (15) comprises first magnetic field-conducting annular discs (29) alternating with second annular discs (31) formed from a material which is an electromagnetic insulator.

17. Electric motor comprising a stator (3) and a rotor (7), **characterized in that** it comprises a rotor according to any of the foregoing claims.

18. Electric motor according to claim 17 depending on claim 9, **characterized in that** the rotor (7) and the stator (3) are housed in a case (5), the stator (3) being secured to the case (5), the rotor (7) being secured to a shaft (9), the motor comprising rotation guide bearings (51) arranged between the case (5) and the shaft (9), at least one bearing (51) being housed at least partly in the recess (26) of the rotor (7).

## Patentansprüche

1. Rotor für einen Elektromotor der Art, die mehrere magnetische Antriebselemente (17) aufweist, die um die Rotationsachse (A) des Rotors verteilt sind, wobei jedes magnetische Antriebselement (17) einen magnetischen Pol des Rotors definiert und eine im Wesentlichen radiale MagnetAchse aufweist, wobei jedes magnetische Antriebselement mindestens einen Dauermagneten (18) aufweist,
wobei mindestens eines der magnetischen Antriebselemente (17) aufweist: eine Mehrzahl von verschiedenen Dauermagneten (18), wobei die Magneten (18) des oder jedes magnetischen Antriebselements (17) voneinander entlang mindestens einer Trennfläche getrennt sind, die im Wesentlichen parallel zu der Magnetachse des oder jedes magnetischen Antriebselements (17) ist, und einen elektrischen Isolator (55), der zwischen den Magneten (18) des oder jedes magnetischen Antriebselements (17) entlang der oder jeder Trennfläche positioniert ist,
**dadurch gekennzeichnet, dass** er aufweist:
- eine Nabe (11), die mit einer Bohrung (21) zum Montieren an einer Welle (9) versehen ist,
- eine Felge (13), die die Nabe (11) umgibt,
- eine Lamellen-Anordnung (15), die die Felge (13) umgibt und an dieser angebracht ist, wobei die Lamellen-Anordnung (15) magnetfeldleitende ringförmige Scheiben (29) aufweist, die axial geschichtet sind, und dass
- die magnetischen Antriebsmittel (17) am äußeren Umfang der Lamellen-Anordnung (15) verteilt sind, und
- die Felge (13) massiv ist und aus einem Metall oder einer magnetfeldleitenden Metall-Legierung gebildet ist, zum Zulassen des Passierens eines Magnetflusses durch die Felge (13), der während des Betriebs eines mit dem Rotor ausgestatteten Elektromotors zwischen den magnetischen Antriebselementen (17) zirkuliert.

2. Rotor gemäß Anspruch 1, **dadurch gekennzeichnet, dass** der Isolator (55) alle Flächen jedes Magneten (18) abdeckt.

3. Rotor gemäß Anspruch 1 oder 2, **dadurch gekennzeichnet, dass** das oder jedes magnetische Antriebselement (17) mindestens eine Trenn-Ebene aufweist, die parallel zu der Achse (A) des Rotors ist.

4. Rotor gemäß einem der vorhergehenden Ansprüche, **dadurch gekennzeichnet, dass** das oder jedes magnetische Antriebselement (17) mindestens eine zu der Achse (A) des Rotors senkrechte Trenn-Ebene aufweist.

5. Rotor gemäß einem der vorhergehenden Ansprüche, **dadurch gekennzeichnet, dass** die Nabe (11) massiv ist und aus einem Metall oder einer magnetfeldleitenden Metall-Legierung gebildet ist.

6. Rotor gemäß Anspruch 5, **dadurch gekennzeichnet, dass** die Felge (13) aus einem Material mit der Nabe (11) ist.

7. Rotor gemäß einem der vorhergehenden Ansprüche, **dadurch gekennzeichnet, dass** die Felge (13) und/oder die Nabe (11) aus magnetfeldleitendem Eisen oder Stahl gebildet sind.

8. Rotor gemäß einem der vorhergehenden Ansprüche, **dadurch gekennzeichnet, dass** die magnetischen Antriebselemente (17) Dauermagneten sind.

9. Rotor gemäß einem der vorhergehenden Ansprüche, **dadurch gekennzeichnet, dass** die Felge (13) axial länger als die Nabe (11) ist, so dass der Rotor an mindestens einem seiner axialen Enden eine zentrale Aussparung (26) aufweist, die radial durch die Felge (123) und axial durch die Nabe (11) begrenzt ist.

10. Rotor gemäß einem der vorhergehenden Ansprüche, **dadurch gekennzeichnet, dass** die Nabe (11) einen zentralen rohrförmigen Abschnitt (19) und eine radiale Umhüllung (23) aufweist, die den zentralen rohrförmigen Abschnitt (19) radial mit der Felge (13) verbindet.

11. Rotor gemäß Anspruch 10, **dadurch gekennzeichnet, dass** der zentrale rohrförmige Abschnitt (19) axial länger ist als die radiale Umhüllung (23).

12. Rotor gemäß einem der vorhergehenden Ansprüche, **dadurch gekennzeichnet, dass** die Lamellen-Anordnung (15) eine radiale Dicke zwischen 2 mm und 100 mm, vorzugsweise zwischen 5 mm und 50 mm aufweist.

13. Rotor gemäß einem der vorhergehenden Ansprüche, **dadurch gekennzeichnet, dass** das Verhältnis der radialen Dicke der Lamellen-Anordnung und der radialen Dicke der Felge zwischen 0,2 und 5 liegt.

14. Rotor gemäß Anspruch 13, **dadurch gekennzeichnet, dass** das Verhältnis der radialen Dicke der Lamellen-Anordnung und der radialen Dicke der Felge zwischen 0,25 und 1 liegt.

15. Rotor gemäß einem der vorhergehenden Ansprüche, **dadurch gekennzeichnet, dass** die Dicken der Lamellen-Anordnung (15) und der Felge (13) derart ausgewählt sind, dass das durch die Oberschwingungen induzierte Magnetfeld in der Lamellen-Anordnung (15) zirkuliert, und das durch die Grundschwingung induzierte Magnetfeld in der Felge (13) und in der Lamellen-Anordnung (15) zirkuliert.

16. Rotor gemäß einem der vorhergehenden Ansprüche, **dadurch gekennzeichnet, dass** die Lamellen-Anordnung (15) erste ringförmige magnetfeldleitende Scheiben (29) aufweist, die sich mit zweiten ringförmigen Scheiben (31) abwechseln, die aus einem Material gebildet sind, das ein elektromagnetischer Isolator ist.

17. Elektromotor, der einen Stator (3) und einen Rotor (7) aufweist, **dadurch gekennzeichnet, dass** er einen Rotor gemäß einem der vorhergehenden Ansprüche aufweist.

18. Elektromotor gemäß Anspruch 17 in Abhängigkeit von Anspruch 9, **dadurch gekennzeichnet, dass** der Rotor (7) und der Stator (3) in einem Gehäuse (5) aufgenommen sind, wobei der Stator (3) mit dem Gehäuse (5) einstückig ist, wobei der Rotor (7) mit einer Welle (9) einstückig ist, wobei der Motor Rotations-Führungslager (51) aufweist, die zwischen dem Gehäuse (5) und der Welle (9) angeordnet sind, wobei mindestens ein Lager (51) zumindest teilweise in der Aussparung (26) des Rotors (7) aufgenommen ist.
